# EUROPEAN PATENT APPLICATION

(11) **EP 1 908 517 A1**
(43) Date of publication of application: **09.04.2008**
(21) Application number: 06764400.5
(22) Date of filing: 07.07.2006
(51) Int. Cl.: B01J 21/06, B01J 23/42, B01J 23/63, B01J 37/00, C01B 3/16, C10K 3/04, H01M 8/06

(54) **CATALYSTS FOR CONVERSION OF CARBON MONOXIDE INTO HYDROGEN AND USE THEREOF IN THE CATALYTIC PROCESS FOR THE HYDROGEN ENRICHMENT OF A GAS CURRENT THAT CAN SUPPLY A FUEL CELL**

(30) Priority: 08.07.2005 ES 200501669
(71) Applicant: Consejo Superior de Investigaciones Cientificas, 28006 Madrid (ES)
(72) Inventor: DAZA BERTRAND, Loreto Insto. de Catálisis y Petroleoq., Campus De Cantoblanco, 28049 Madrid (ES); BENITO GONZÁLEZ, Manuel Jesús Insto. de Catálisis y Petrol, Campus De Cantoblanco, 28049 Madrid (ES); ISABEL GÓMEZ, Ruth Insto. de Catálisis y Petroleoq., Campus De Cantoblanco, 28049 Madrid (ES); PADILLA PALMA, Rita Insto. de Catálisis y Petroleoq., Campus De Cantoblanco, 28049 Madrid (ES)
(74) Representative: Ungria Lopez, Javier
(86) International application number: PCT/ES2006/070102
(87) International publication number: WO 2007/006838

(57) **Abstract**

The invention relates to catalysts for the conversion of carbon monoxide, using the water gas shift reaction, comprising a substrate, a promoter and an active phase. According to the invention, the substrate comprises at least one oxide having high surface mobility, the promoter comprises at least one rare earth oxide selected from the lanthanide group and the active phase comprises at least one oxide of a group VIII transition metal. The invention also relates to a method of producing hydrogen from a current containing carbon monoxide and water and to the use thereof in the removal of carbon monoxide from a current originating from a reforming process. The invention further relates to the use of said catalysts in a fuel processor in order to obtain hydrogen to supply a high-, medium- or low-temperature fuel cell.

## Description

### SECTOR OF THE ART

The present invention belongs to the sectors of energy production and the chemical industry, specifically catalysts for the conversion of carbon monoxide and hydrogen production by the water gas shift reaction. The resulting gas current can be used as fuel in fuel cells or be used in other petrochemical processes.

### STATE OF THE ART

The water gas shift (WGS) reaction has been used on the industrial scale since the '60s for the production of hydrogen from liquid or gaseous hydrocarbons, said hydrogen normally being used for the production of ammonia or hydrogenation of oils. It has recently acquired considerable interest on account of its use in fuel processors for reducing the concentration of CO in the reforming gas current, in order to obtain hydrogen of suitable purity that can be supplied to a fuel cell. In particular, for phosphoric acid fuel cells (PAFC) and polymer fuel sells (PEMFC), the CO acts as a poison on the anodic electrocatalyst, and its elimination is therefore crucial for this type of device.

Fuel cells are devices capable of directly converting the chemical energy of the fuel into electrical and thermal energy, eliminating the intermediate mechanical stages which lead to a considerable reduction in the efficiency of the process. In the case of a polymer fuel cell (PEMFC), an aspect to solve is the need to increase its resistance to poisoning by carbon monoxide present in the hydrogen current as an impurity. Attempts are being made to solve the problem by means of developing more resistant electrocatalysts.

Nevertheless, although improvements in their resistance have been achieved, the problem needs to be solved by trying to obtain purer hydrogen currents, which are usually produced starting from reforming processes. These hydrogen currents of greater purity can be obtained by using various techniques: membrane reactors, pressure swing adsorption (PSA), catalytic conversion of carbon monoxide by means of water gas shift (WGS) reaction and selective oxidation of carbon monoxide (COPROX). In the current state of the art, membrane type reactors usually use palladium membranes in order to separate the hydrogen from the reforming current, and these membranes are technically very difficult to prepare and are very costly on account of their high palladium content. PSA systems achieve high purity currents but they are systems that work under pressure, while the hydrocarbons reforming reaction is thermodynamically favoured by low pressures. Therefore, a technically and economically viable solution would be to use WGS and COPROX reactions.

The function of the WGS reaction in this type of process is to increase the concentration of hydrogen and reduce the concentration of CO. It is a slightly exothermic reaction in which the carbon monoxide reacts with steam to produce hydrogen and carbon dioxide. In order to be able to achieve conversions as close as possible to equilibrium, this reaction is normally carried out in two stages, at high temperature and low temperature, with an intermediate cooling. As this concerns an exothermic reaction, its use in a global process for obtaining hydrogen would, in addition to reducing the concentration of carbon monoxide, also improve the energy balance of the process in comparison with other types of systems such as PSA.

The high temperature WGS (HT-WGS) reaction is usually carried out at between 500°C-300°C with Fe/Cr type catalysts, while the low temperature WGS (LT-WGS) reaction is usually carried out in the interval 300°C-180°C with Cu/Zn/Al type catalysts. This type of catalyst usually presents the problem that is has to be previously stabilised, both in the start-up stage and in the shutdown of the reactor, since both are pyrophoric. Other problems are the stability of the catalyst (this type of system used to have lengthy deactivation processes, which involves overdimensioning the reactors in order to compensate for this effect) and selectivity (there is the possible appearance of secondary reactions, such as the methanation reaction, with CO being eliminated at the expense of hydrogen consumption). In terms of the process, the spatial velocity can be highlighted. In the case of the HT-WGS reaction, the process is usually carried out at velocities of the order of 6,000 h⁻¹, while the LT-WGS reaction is usually carried out at around 3,000 h⁻¹. If it is taken into account that the spatial velocity in the reforming process for obtaining hydrogen is of the order of 100,000 h⁻¹, the WGS reaction would be the controlling stage in the process and would determine the final volume of the system or fuel processor. As a result of the HT-WGS reaction, the usual thing is to obtain CO concentrations of the order of 3-4%, falling to 0.5-1% in the LT-WGS stage.

Another overriding aspect in the development of catalysts for the WGS reaction is that the catalyst has to have high activity and stability in the presence of a hydrogen-rich supply current and in which compounds could be present coming from the reforming process for hydrocarbons or alcohols. It can be highlighted that most of the catalysts described in the bibliography have been studied under ideal conditions, in other words, in the presence of CO and water only.

Among the patents related to the object of this invention, the following can be highlighted:

W.F. Ruettinger *et al. (Suppression of Methanation Activity of Platinum Group Metal Water-Gas-Shift Catalysts,* US 6.790.432 B2, Sep. 14, 2004) use catalysts based on platinum group metals supported on cerium oxide or ceria-zirconia; in spite of using titanium and gallium oxide as inhibitor agent for the methanation reaction, small quantities of methane are still formed.

D.B. Rogers *et al. (Water gas shift catalyst on a lanthanum-doped anatase titanium dioxide support for fuel cells application,* US 2005/119119 A1, Jun. 2, 2005) develop a platinum and rhenium catalyst supported on titanium oxide (anatase) and doped with lanthanum oxide with the aim of increasing the stability and reducing the concentration of CO to levels below 50 ppm in dry base; no results are provided that would permit a check to be made that the objective was achieved, though they affirm that at between 225 and 275°C the stability of the developed catalyst is three times greater than other previously developed catalysts.

Lee *et al. (Catalyst for water shift gas reaction and method for converting carbon monoxide and water to hydrogen and carbon dioxide,* US 2004/0105804 A1, Jun. 3, 2004) describe the preparation and use of a platinum-based catalyst (0.5-5%), promoted by rhenium (0.1-3%) and supported on Cu/ZnO/Al₂O₃; conversions of 90% are achieved at 300°C.

*Mizobuchi et al. (Catalyst for removing carbon monoxide in hydrogen rich* gas *an production method therefor,* US 6.713.032 B2, Mar. 30, 2004) describe the preparation and use of a platinum catalyst (0.05-3%) supported on titanium oxide (rutile) and promoted by rhenium (0.01-10%); they achieve CO conversions of higher than 90% at 250°C, at spatial velocities between 5000 h⁻¹ and 10000 h⁻¹.

Igarashi *et al. (Catalyst for water gas shift reaction, method for removing carbon monoxide in hydrogen gas and fuel cell generation system,* US 2005/0031920 A1, Feb. 10, 2005) with practically the same authors as in the previous patent, expand their field of use to the supply of high purity hydrogen for fuel cells. Conversions of higher than 90% in the range 250-350°C, without deactivation after 5 hours of reaction.

T.L. Walsh *et al. (Water gas shift catalyst for fuel cells application,* US 2005/0119118 A1, Jun. 2, 2005) develop a platinum-rhenium catalyst (20%, between 1 Pt : 0.9 Re and 5 Pt : 1 Re) and lanthanum (0.1-20% La₂O₃) supported on titanium oxide (rutile). No reaction results are provided though they comment that the developed catalyst is efficient for the conversion of CO to CO₂ in the temperature range 225-275°C.

### DESCRIPTION OF THE INVENTION:

The present invention has as its object the development of new catalysts that are non-pyrophoric, highly active, selective and stable for the conversion of carbon monoxide into hydrogen by means of the water gas shift (WGS) reaction, without the methanation reaction taking place when operating with hydrogen-rich gas currents which, for example, can come from a reforming process, and which can supply a fuel cell; a process for preparation of said catalysts and the use of these catalysts in such catalytic process.

In accordance with the invention, the catalyst is a solid comprising an active phase belonging to group VIII, a support selected from the group of inorganic oxides consisting of alumina, silica, zirconium oxide or combinations thereof, and a promoter agent selected from the group of rare earth oxides.

This catalyst, used in catalytic processes of carbon monoxide conversion, displays high catalytic activity, high selectivity to hydrogen, without methane formation by hydrogenation of CO, and high stability, without any appreciable deactivation after 500 hours of continual operation, because it contains one or several metals of transition group VIII composed of platinum, palladium, ruthenium, cobalt and nickel as the active phase, as substrate it uses a high surface mobility oxide, and as promoter one or several rare earth metals selected from the lanthanide group. Preferably, the transition metal used as the active phase is platinum, the substrate used as support is zirconium oxide or zirconium oxide and silicon oxide, and the rare earth metal used as promoter is lanthanum or cerium.

In accordance with a preparation of the catalyst, this can comprise from 0.1 to 10% by weight of the active phase and from 0 to 30% by weight of the promoter agent. Preferably, the catalyst comprises from 0.1 to 5% by weight of the active phase and from 0 to 20% by weight of the promoter agent. In a preferred preparation, the catalyst comprises from 0.1 to 2% by weight of the active phase and from 0 to 15% by weight of the promoter agent. In a preferred practical embodiment, the catalyst comprises from 0.3 to 1% by weight of the active phase and from 0 to 10% by weight of the promoter agent supported on zirconium oxide or on zirconium oxide and silicon oxide.

The present invention refers to a preparation process of the catalyst with the characteristics described above. This procedure comprises a first stage in which the high surface mobility substrate is modified with the promoter agent in order to obtain the modified support; a second stage by which a salt of the active phase is homogeneously incorporated into the modified support obtaining a catalytic precursor which is subjected to a drying stage. In a third stage the resulting catalyst can be calcined and then reduced.

The present invention also refers to the use of the catalyst with the properties described above, in a method for the production of hydrogen starting from a current containing carbon monoxide and water, by which total conversion of CO is obtained starting from 250°C without methane formation.

The present invention also refers to the use of the catalyst with the properties described above, in a method for the elimination of carbon monoxide from a hydrogen-rich gas current, which can come, from example, from a reforming process, by means of the reaction of CO with water to form hydrogen, without methane formation, by reaction of the carbon monoxide with hydrogen, therefore increasing the production of hydrogen in the gas current being supplied.

In one part of the process, the gas current composed of hydrogen, carbon monoxide, methane and carbon dioxide comes into contact with the catalyst, achieving a CO conversion of higher than 90% at 300°C without methane formation, eliminating the CO from the gas current by the water shift gas reaction up to concentrations of around 0.5% in a single stage. In long duration tests of more than 500 hours under the same conditions, the activity and selectivity of the catalyst is maintained without any signs of deactivation being appreciated and without methane formation, with a hydrogen production and CO elimination at levels of the order of 0.5% in the final gas current.

The present invention also refers to the use of these catalysts in a fuel processor in order to obtain hydrogen which can supply a high-, medium- or low-temperature fuel cell.

### EXAMPLES OF EMBODIMENT OF THE INVENTION:

- Fig.1.: X-ray diffraction diagram corresponding to the sample of example 1.
- Fig.2.: X-ray diffraction diagram corresponding to the sample of example 2.
- Fig.3.: Pore distribution corresponding to the sample of example 2.
- Fig.4.: X-ray diffraction diagram corresponding to the sample of example 3.
- Fig.5.: CO conversion as a function of temperature, for a CO-H₂O supply (example 4).
- Fig.6.: Selectivity to H₂, CO, CH₄ and CO₂ as a function of temperature, for a CO-H₂O supply (example 4).
- Fig.7.: CO conversion as a function of temperature, for a supply of gas coming from reforming (example 5).
- Fig.8.: Selectivity to H₂, CO, CH₄ and CO₂ as a function of temperature, for a supply of gas coming from reforming (example 5).
- Fig.9.: CO conversion in a trial lasting 500 h with a supply of gas coming from reforming (example 6).
- Fig.10.: Selectivity to H₂, CO, CH₄ and CO₂ as a function of temperature, in a trial lasting 500 h, with a supply of gas coming from reforming (example 6).

### EXAMPLE 1

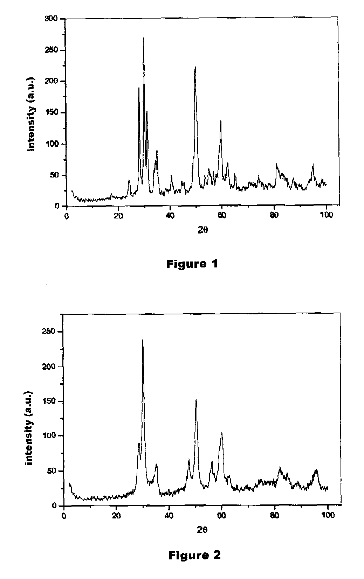

10 g of a support of 10% Ce-ZrO₂ are weighed out, it is calcined at 700 °C for 2 hours with a rate of heating of 2 °C/min. 0.129 g of H₂Cl₆Pt x nH₂O at a purity of 99.9% is weighed in order to obtain a platinum content of 0.5%. They are dissolved in 50 ml of distilled water. The precursor salt solution of platinum is introduced into the flask of the rotavapor. The pressure is 380 mm Hg and the temperature of the thermostatic bath is 50 °C. Once the solvent has evaporated, the catalyst is introduced into a stove at 110 °C for 12 h in order to eliminate the residual solvent and is calcined at 500 °C for 2 hours at a rate of heating of 5 °C/min. The catalyst was characterised by X-ray diffraction (Fig. 1).

The equipment used in these analyses consists of a diffractometer of the brand SEIFERT 3000P coupled to a computing system for the data gathering and processing. A record of diffractograms will be taken for angles lying between 4° and 80° using CuKα radiation of wavelength A = 0.154005980 mm. The identification of the crystal phases has been carried out taking as reference the X-ray diffraction databases of the Joint Committee on Powder Diffraction Standard 1971, managed by means of a computer programme known as PDFWIN.

The catalyst was characterised texturally for the determination of the BET surface area by nitrogen adsorption, showing a specific surface of 57 m²/g.

### EXAMPLE 2

10 g of a support of ZrO₂-SiO₂ are weighed out, it is calcined at 700 °C for 2 hours with a rate of heating of 2 °C/min. 7.875 g the salt Ce(NO₃)₃ x 6H₂O with a purity of 99% is weighed and dissolved in 50 ml of distilled water. The precursor salt solution is introduced into the flask of a rotavapor. The pressure is 380 mm Hg and the temperature of the thermostatic bath is 50 °C. Once the solvent has evaporated, the catalyst is introduced into a stove at 110 °C for 12 h in order to eliminate the residual solvent and is calcined at 500 °C for 2 hours at a rate of heating of 5 °C/min. 0.161 g of H₂Cl₆Pt x nH₂O at a purity of 99.9% is weighed in order to obtain a platinum content of 0.5%. They are dissolved in 50 ml washing. The precursor salt solution of platinum is introduced into the flask of the rotavapor already containing the support modified by the promoter. Once the solvent is eliminated, the catalyst is collected, dried for 12 h at 110 °C and calcined at 500 °C for 2 hours. The catalyst was characterised by X-ray diffraction (Fig. 2).

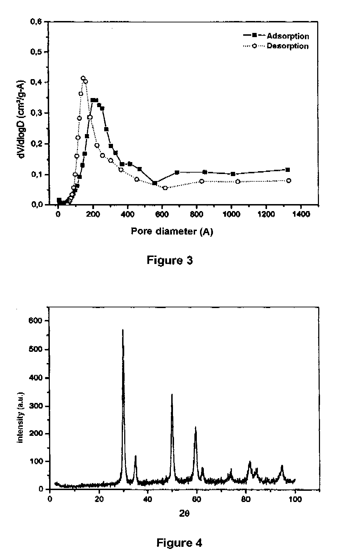

The catalyst was characterised texturally for the determination of the BET surface area by nitrogen adsorption, showing a specific surface of 32 m²/g, and the pore distribution was determined (Fig. 3).

### EXAMPLE 3

10 g of a support of 10% La-ZrO₂ are weighed out, it is calcined at 800 °C for 2 hours with a rate of heating of 2 °C/min. 0.129 g of H₂Cl₆Pt x nH₂O at a purity of 99.9% is weighed in order to obtain a platinum content of 0.5%. They are dissolved in 50 ml of distilled water. The mixture is treated in a rotavapor at a pressure of 380 mm Hg, the temperature of the bath being 50 °C, as far as complete dryness. The catalyst is dried in a stove at 110 °C for 12 h and then calcined at 500 °C for 2 hours at a rate of heating of 5 °C/min.

The catalyst was characterised by X-ray diffraction (Fig. 4).

The catalyst was characterised texturally for the determination of the BET surface area by nitrogen adsorption, showing a specific surface of 56 m²/g.

### EXAMPLE 4

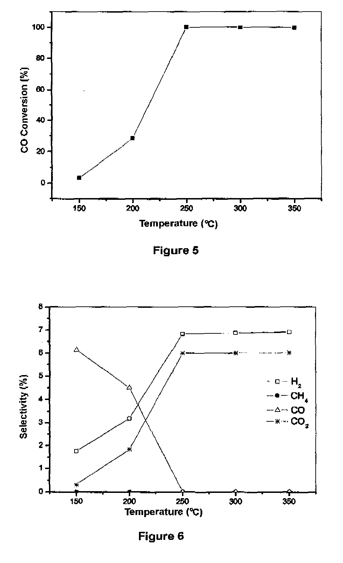

0.38 g of catalyst, prepared according to example 2 with a particle size between 0.42 mm and 0.56 mm, is introduced into a tubular reactor. It is subjected to reduction treatment *in situ* with a hydrogen current of 100 ml for two hours at 500°C. 0.118 ml/min of water is supplied at 25 °C and 8.7 ml/min of carbon monoxide under normal conditions, with a spatial velocity (GHSV) of 35,000 h⁻¹, the reaction temperature varying between 150 °C and 350 °C. The data obtained on CO conversion as a function of temperature, along with the selectivity to the different products, are presented in Figures 5 and 6, respectively. A total conversion of CO is observed starting from 250 °C without any methane production.

### EXAMPLE 5

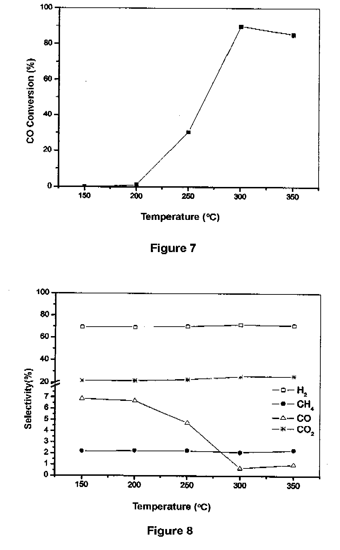

1 g of catalyst, prepared according to example 2 with a particle size between 0.42 mm and 0.56 mm, is introduced into a tubular reactor. It is subjected to reduction treatment *in situ* with a hydrogen current of 100 ml for two hours at 500°C. A mixture characteristic of reforming is supplied with the following flows: 0.118 ml/min of water at 25 °C and 97.2 ml/min of hydrogen, 29.7 ml/min of carbon dioxide, 8.7 ml/min of carbon monoxide and 3.0 ml/min of methane under normal conditions, with a spatial velocity (GHSV) of 24,000 h⁻¹, the reaction temperature varying between 150 °C and 350 °C. The conversion and selectivities obtained as a function of temperature are presented in Figures 7 and 8, respectively. A conversion of 90% is achieved at 300 °C without any methane production, increasing the selectivities to H₂ and CO₂, the final products of the water gas shift reaction.

### EXAMPLE 6

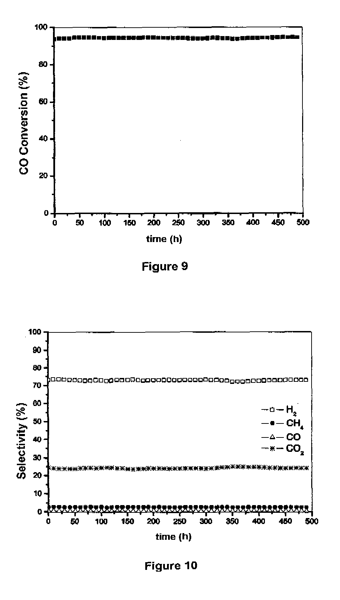

1 g of catalyst, prepared according to example 2 with a particle size between 0.42 mm and 0.56 mm, is introduced into a tubular reactor. It is subjected to reduction treatment *in situ* with a hydrogen current of 100 ml for two hours at 500°C. A mixture characteristic of reforming is supplied with the following flows: 0.118 ml/min of water at 25 °C and 97.2 ml/min of hydrogen, 29.7 ml/min of carbon dioxide, 8.7 ml/min of carbon monoxide and 3.0 ml/min of methane under normal conditions, with a spatial velocity (GHSV) of 24,000 h⁻¹, operating at 300 °C for 500 h. The CO conversion stays stable at a value of 94.5% (Figure 9) without any methane production, with the selectivities to H₂ and CO₂ the final products of the water gas shift reaction, being kept constant (Figure 10).

## Claims

1. Selective catalyst for the conversion of carbon monoxide, by means of the water gas shift reaction, **characterised in that** in the active phase an element of group VIII is involved supported on oxides of the group of inorganics.

2. Selective catalyst for the conversion of carbon monoxide, by means of the water gas shift reaction, according to claim 1, **characterised in that** platinum is preferably used as the active phase.

3. Selective catalyst for the conversion of carbon monoxide, by means of the water gas shift reaction, according to claims 1 and 2, **characterised in that** the concentration of the active phase lies between 0.1-10%.

4. Selective catalyst for the conversion of carbon monoxide, by means of the water gas shift reaction, according to claims 1 to 3, **characterised in that** the inorganic support used is a mesoporous support of high surface mobility with a modified crystal structure.

5. Selective catalyst for the conversion of carbon monoxide, by means of the water gas shift reaction, according to claims 1 to 4, **characterised in that** the inorganic support used has been selected from the group of inorganic oxides consisting of alumina, silica, zirconium oxide, rare earth oxides or combinations thereof.

6. Selective catalyst for the conversion of carbon monoxide, by means of the water gas shift reaction, according to claims 1 to 5, **characterised in that** the inorganic support used preferably consists of zirconium oxide or zirconium oxide and silicon oxide.

7. Selective catalyst for the conversion of carbon monoxide, by means of the water gas shift reaction, according to claims 1 to 6, **characterised in that** the inorganic support used is modified by a rare earth oxide, preferably of cerium or lanthanum.

8. Selective catalyst for the conversion of carbon monoxide, by means of the water gas shift reaction, according to claims 1 to 7, **characterised in that** an aqueous solution of the precursor salt of a lanthanide is first impregnated on the inorganic support, followed by an aqueous solution of a precursor salt of a metal belonging to group VIII.

9. Process for conversion of carbon monoxide, by means of the water gas shift reaction, according to the above claims, **characterised in that** a high conversion of carbon monoxide is achieved, without methanation reaction, at temperatures lying between 250-300 °C and atmospheric pressure.

10. Process for conversion of carbon monoxide, by means of the water gas shift reaction, according to claims 1 to 9, **characterised in that** high spatial velocities are achieved maintaining high conversions of carbon monoxide, stability and selectivity, at temperatures lying between 250-300 °C and atmospheric pressure.

11. Process for conversion of carbon monoxide, by means of the water gas shift reaction, according to claims 1 to 10, **characterised in that** the gas current can furthermore contain compounds coming from a reforming reaction such as hydrogen, methane and carbon dioxide.

12. Use of the selective catalyst for conversion of carbon monoxide, by means of the water gas shift reaction, according to claims 1 to 11, for the production of hydrogen starting from a current containing carbon monoxide and water.

13. Use of the selective catalyst for conversion of carbon monoxide, by means of the water gas shift reaction, according to claims 1 to 12, for the enrichment in hydrogen of a hydrogen-rich gas current such as that coming from a reforming process.

14. Use of the selective catalyst for conversion of carbon monoxide, by means of the water gas shift reaction, according to claims 1 to 13, for the elimination of carbon monoxide from a hydrogen-rich gas current such as that coming from a reforming process, without the methanation reaction taking place.

15. Use of the selective catalyst for conversion of carbon monoxide, by means of the water gas shift reaction, according to claims 1 to 14, in a fuel processor in order to obtain hydrogen for supplying a high-, medium- or low-temperature fuel cell.
